**Europäisches Patentamt**

**European Patent Office**

**Office européen des brevets**

(19)

(11) Veröffentlichungsnummer: **0 251 219**
**A2**

(12) # EUROPÄISCHE PATENTANMELDUNG

(21) Anmeldenummer: **87109169.0**

(22) Anmeldetag: **26.06.87**

(51) Int. Cl.4: **B60P 1/64**

(30) Priorität: **28.06.86 DE 8617393 U**

(43) Veröffentlichungstag der Anmeldung:
**07.01.88 Patentblatt . 88/01**

(84) Benannte Vertragsstaaten:
**AT BE CH DE FR GB IT LI NL SE**

(71) Anmelder: **Wilcke, Hans**
**Gotenstrasse 9**
**D-5484 Bad Breisig(DE)**

(72) Erfinder: **Wilcke, Hans**
**Gotenstrasse 9**
**D-5484 Bad.Breisig(DE)**

(54) **Transportfahrzeug mit Selbstladeeinrichtung für Container, Raumzellen und Behälter.**

(57) Die Erfindung betrifft ein Fahrzeug zum Transport von Containern, Raumzellen, Flats, Fertiggaragen und anderen Transportgütern und Behälter mit großer Raumausdehnung mit einer Selbstladeeinrichtung, die das Aufnehmen oder Absetzen der Last vom Boden, von anderen Fahrzeugen und von Stapeln hinter dem Fahrzeug erlaubt, ein Drehen der Last um seine senkrechte Achse auf dem Fahrzeug gestattet und eine feinfühlige Positionierung der Last um die Hoch-, Längs-und Querachse ermöglicht und darüber hinaus den Einsatz des Fahrzeugs im Wechselpritschen-Transport und als Kipper für Schüttgut erlaubt.

Besondere Kennzeichen: Der Hubgerüstbewegung (7) zwangsweise folgende Abspannung (62), Stirn-und längsseitige Zwei-Punkt-Aufhängung (19,20,23) und verschiedene Vier-Punkt-Aufhängungen der Container, Serien-/Parallelschaltung von Stellgliedern, Bedienungsplattform (52) für 1-Mann-Bedienung, versenkbare Container-Drehvorrichtung, elastische Kissen (18) als Stellglieder.

Fig.1

## Transportfahrzeug mit Selbstentladeeinrichtung für Container, Raumzellen und Behälter

Die Erfindung betrifft ein Fahrzeug zum Transport von Containern, Raumzellen, Flats, Fertiggaragen und anderen Transportgütern und Behältern mit großer Raumausdehnung mit einer Selbstladeeinrichtung, die das Aufnehmen oder Absetzen der Last vom Boden, von anderen Fahrzeugen oder von Stapeln hinter dem Transportfahrzeug erlaubt, ein Drehen der Last um seine senkrechte Achse gestattet und eine feinfühlige Positionierung der Last um die Hoch-, Längs-und Querachse ermöglicht und darüber hinaus den Einsatz des Fahrzeugs im Wechselpritschen-Transport und als Kipper für Schüttgut erlaubt.

Es sind Container-Ladeeinrichtungen für Fahrzeuge bekannt, mit denen Container parallel zur Fahrzeug-Längsachse geladen oder entladen werden können. Von Nachteil ist, daß aufwendige Abstützvorrichtungen erforderlich sind, um ein Umkippen der Fahrzeuge beim Ladevorgang zu verhindern.

Weiterhin werden auf Transportfahrzeugen installierte Ladekräne zum Umschlagen von Leercontainern verwendet. Von Nachteil ist, daß bei ihrer Installation unmittelbar hinter dem Fahrerhaus die Lastaufnahme vorwiegend parallel zur Fahrzeug-Längsachse erfolgen muß, deshalb erheblich über die Fahrzeugbreite hinausragende Abstüzungen erforderlich sind, zur Nutzung der üblichen Seil-Lastgeschirre der Kranarm eine große Länge und Ausladung besitzen muß, deshalb nur schwere Kräne Verwendung finden können, die schwere Lastkraftwagen erfordernd damit ein unwirtschaftliches Verhältnis zwischen Leergewicht und Nutzlast des Lkw bewirken.

Weiterhin sind Transportfahrzeuge besonders für leercontainer bekannt, deren Ladefläche zum Auf-und Abladen der Container nach hinten neigbar ist und die Container dann mit Winden auf die Ladefläche gezogen oder von ihr heruntergedrückt werden. Von Nachteil ist, daß die Container mit Kufen ausgerüstet werden müssen, Container nach ISO-Norm nur mit Schwierigkeiten verladbar sind, die Container beim Verladen geneigt werden und deshalb z.B. Einrichtungsgegenstände im Container besonders gezurrt werden müssen und daß mit diesen Fahrzeugen ein Stapeln der Container nicht möglich ist.

Dieser Erfindung liegt die Aufgabe zugrunde, ein mit einer Selbstladeeinrichtung ausgestattetes Fahrzeug für den Transport von Containern und anderen Lasten ähnlicher Raumausdehnung vorzustellen, daß eine günstige Relation zwischen Eigengewicht und Nutzlast des Fahrzeugs erlaubt und während des über das Heck des Fahrzeugs vorzunehmenden Hebevorganges die Länge des Fahrzeugs und seine Gewichtsverteilung als Gegengewicht beim hub ausnutzt.

Weiter soll das Fahrzeug Ladevorgänge mit geringem Zeitaufwand sicherstellen, zum Versetzen von Containern auf Lager-und Umschlagplätzen nutzbar sein, ein genaues Positionieren von Containern z.B. beim Aufbau von Wohn-und Bürocontainer-Anlagen auch in mehreren Ebenen sicherstellen und gewährleisten, daß alle beim Anschlagen, Be-und Entladen, Verbauen und Transportieren anfallenden Arbeiten von einer Bedienungsperson allein ausgeführt werden können.

Darüber hinaus soll das Fahrzeug in der Lage sein, Wechselbrücken zu transportieren und als Abrollkipper und als Hinterkipper umrüstbar sein.

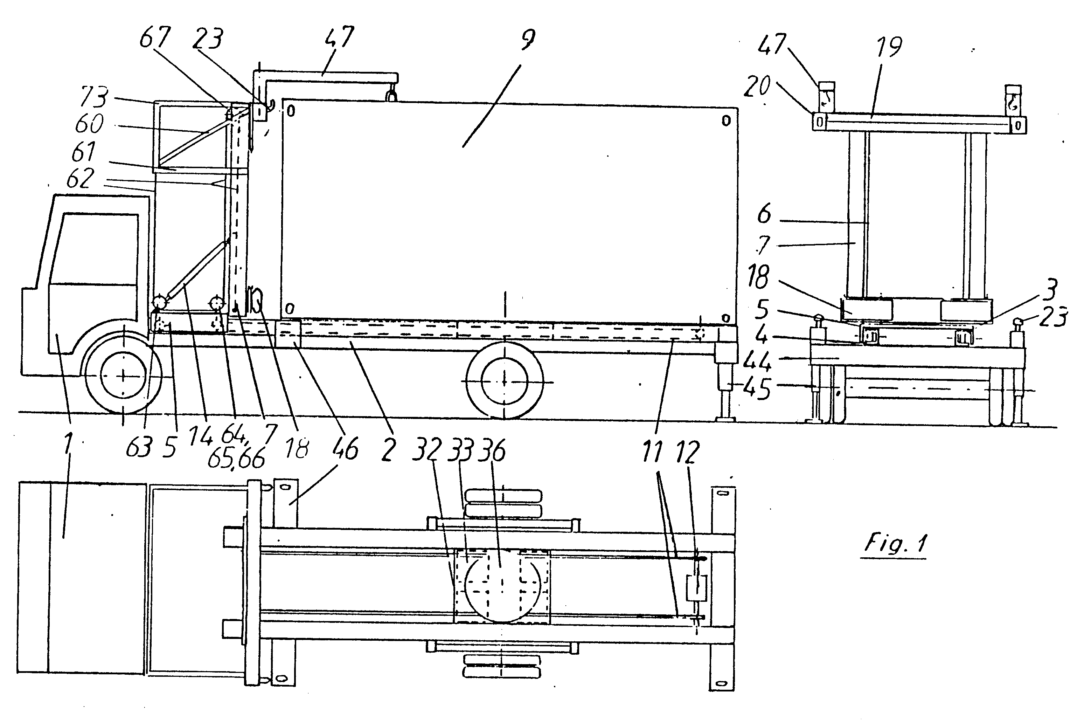

Die gestellte Aufgabe wird dadurch gelöst ( vergl. Fig. 1), daß auf dem Transportfahrzeug (1), z.B. einem Lkw, ein auf einem Hubgerüstwagen (5) in Richtung der Fahrzeug-Längsachse verfahrbares Hubgerüst (6), installiert ist. Die Neigung des Hubgerüstes (6) ist durch verstellbare Hubgerüststützen (14) einstellbar. Am beweglichen Teil des Hubgerüsts (7) ist eine in ihrer Länge verstellbare Quertraverse (19) angebracht, mit der der zu bewegende Container seitlich an einer Stirn seite oder einer Längsseite erfaßt und angeschlagen wird. Mit Hilfe des beweglichen Teils des Hubgerüsts (7) wird der Container auf Stapelhöhe gehoben bzw. zum Boden abgesenkt und kann mit der Quertraverse (19) seitlich in geringem Umfang bewegt werden.

Am beweglichen Teil des Huberüsts (7) sind hydraulisch oder pneumatisch aufblasbare Kissen (18) angebracht, die dem Kippmoment des Containers entgegen wirken. Durch gleichzeitiges Betätigen beider Kissen (18) kann der Container quer zur Fahrzeuglängsachse und durch Betätigen nur eines Kissens (18) um seine senkrechte Achse geschwenkt werden.

Die Standfestigkeit des Fahrzeugs beim Heben der Container wird durch einen Querträger (44) mit hydraulisch oder pneumatisch betätigten Stützen (45) gewährleistet. Durch Betätigen der Stützen in gegenläufigem Sinne kann ein geringfügiges Schwenken des Containers um die Längsachse des Fahrzeugs bewirkt werden.

Wurde der Container an seiner Längsseite angeschlagen, so kann er auf der Drehvorrichtung (31) abgesetzt und in Transportrichtung gedreht werden. Durch Absenken wird der Container auf dem hinteren Querträger (44) und den vorderen Traversen (46) abgesetzt und dort zur Transportsicherung verriegelt. Zum Heben von Wech-

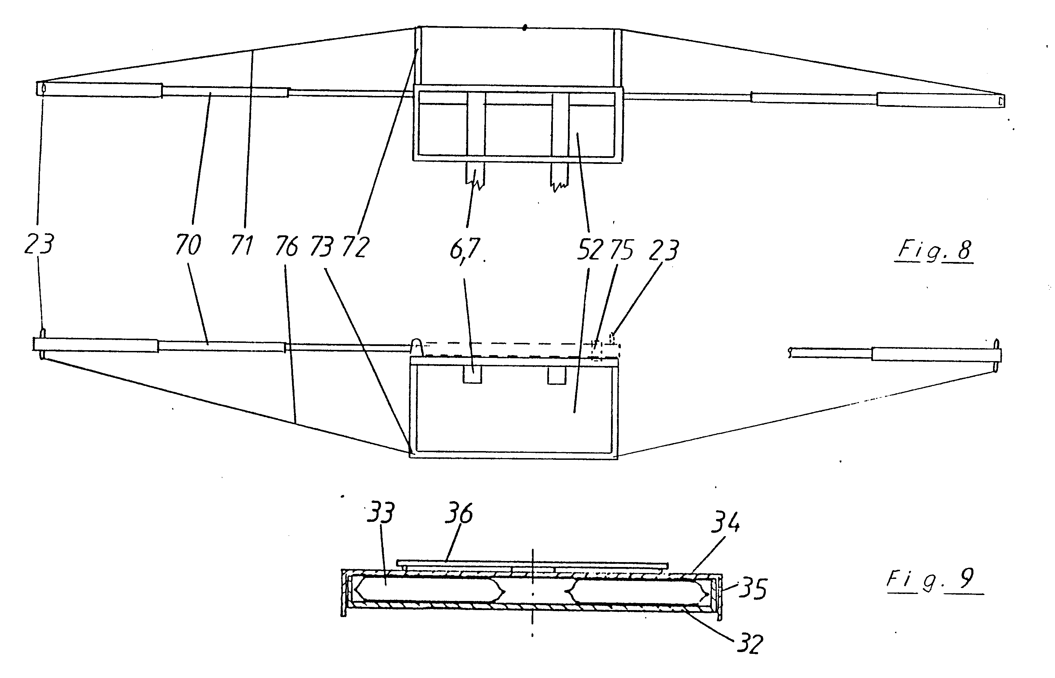

selbrücken (51) oder anderer Transportplättformen oder Behältern, die nur am Boden oder an den Seitenwänden Lastenanschlagpunkte besitzen ( vergl. Fig. 8 und 9 ), werden diese mit in ihrer Länge abgestimmten oder mit Verkürzungsgliedern versehenen Ketten, Seilen oder Bändern (50) an den Anschlaggliedern (23) der Quertraverse (19,20), mit Hilfe von Anschlagwinkeln (49) angeschlagen. Durch teleskopierbare Ausleger (70) können auch Raumzellen, deren Anschlagaugen nicht an den oberen Ecken angebracht sind oder Raumzellen, die aus Festigkeitsgründen an den vier oberen Eckpunkten angeschlagen werden müssen, stirnseitig gehoben werden.

Durch Verwendung von Anschlaggliedern (80) können Raumzellen die nur an den unteren Ecken anschlagbar sind, in Gruppen mit dem üblichen Maximalabstand von 25 mm zwischen den Zellen stirnseitig angeschlagen verbaut und das Geschirr von der Arbeitsplattform aus in Ein-Mann-Bedienung zeitgünstig eingeholt werden.

Zur Verwendung als Abrollkipper kann das Fahrzeug mit handelsüblichen Teilen zum Aufnehmen von Abroll-Kippbehältern ausgestattet werden. Der notwendige Hubvorgang wird durch das Hubgerüst (6), die Bewegung in der Fahrzeuglängsachse durch Betätigen des Hubgerüstwagens (5) bewirkt.

Im Folgenden wird die Erfindung in Einzelheiten anhand von Zeichnungen näher erläutert und alternative Gestaltungen aufgezeigt. Dabei zeigen die Zeichnungen lediglich ein Ausführungsbeispiel, die Alternativen erheben keinen Anspruch auf Vollständigkeit, weitere Gestaltungsmöglichkeiten sind denkbar.

Fig. 1 zeigt das Transportfahrzeug mit Ladeeinrichtung in Seitenansicht, von der Rückseite und von oben gesehen.

Fig. 2 zeigt eine Gestaltung einer teleskopierbaren Quertraverse (19) und die Fig. 3, 4 und 5 Bestaltungsmöglichkeiten der Quertraverse zusammen mit dem Hubgerüst (6),

Fig. 6 eine besondere Anschlagform von Containern,

Fig. 7 zeigt das Transportfahrzeug mit Auslegern für eine stirnseitige Vier-Punkt-Aufhängung der Container in 3 Ansichten,

Fig 9 einen Schnitt durch eine Drehvorrichtung (31),

Fig. 10 u. 11 die Anschlagvorrichtung für Wechselbrücken (51),

Fig. 12 u. 13 eine fernlösbare Anschlagvorrichtung (80).

In Fig. 1 ist der Rahmen (2) des Fahrzeugs (1) mit den darauf als Hilfsrahmen (3) befestigten Führungsschienen (4) erkennbar. Die vornehmlich U-förmig ausgebildeten, nach außen offenen Führungsschienen (4) nehmen den mit Rädern versehenen Hubgerüstwagen (5) auf.

Der Hubgerüstwagen (5) wird über umlaufende Seile oder Ketten (11) oder über rückensteife Ketten von einem am Fahrzeugrahmen (2) oder Hilfsrahmen (3) befestigten, hydraulisch, elektrisch oder pneumatisch betriebenen Stellmotor (12) bewegt, der so ausgestaltet ist, daß der Hubgerüstwagen (5) in jeder beliebigen Position fixiert werden kann.

Alternativ können die Schienen (4) als Zahnstangen ausgebildet sein, in die Zahnräder eingreifen, die von einem Stellmotor am Hubgerüstwagen (5) angetrieben werden.

Am hinteren Ende des Hubgerüstwagens (5) ist, die waagerechte Achse (13) schwenkbar, der feste Teil des Hubgerüsts (6) angebracht. Es ist weiter über schräge Hubgerüststützen (14) mit der Vorderkannte des Hubgerüstwagens (5) verbunden. Die Stützen (14) sind hydraulisch, pneumatisch oder in anderer Weise in ihrer Länge so verstellbar, daß das Hubgerüst (6) um etwa je ca. 10° nach beiden Seiten geneigt werden kann.

Alternativ kann der feste Teil des Hubgerüsts (6) mittels fester Stützen (14) mit einer geringen Neigung nach hinten am Hubgerüstwagen (5) angebracht sein.

Am festen Teil des Hubgerüsts (6) ist vertikal beweglich der bewegliche Teil des Hubgerüsts (7) angebracht, der an seinem oberen Ende mit einer Quertraverse (19) versehen ist. An ihre lastabgewandten Seite sind schräg abwärts geneigt Zugstücke (60) angebracht, die an ihren unteren Enden mit Abstützungen (61) zum beweglichen Hubgerüstteil (7) verbunden sind und an denen nach unten führende Ketten oder Seile (62) angebracht sind. Sie sind etwa parallel zum Hubgerüst (6) zum vorderen Teil des Hubgerüstwagens (5) geführt, laufen dort über Rollen (63) zu Antriebsrädern (64), die durch gemeinsame Welle (65) von einem Antriebsaggregat (66) mit Selbstsperrung angetrieben werden. Von dort sind die Ketten/Seile (62) über Umlenkrollen (67) im oberen Teil des feststehenden Hubgerüstteils (6) geführt und am unteren Teil des beweglichen Hubgerüstteils (7) befestigt.

Alternativ können statt der Ketten (62) Seile verwendet werden, die über zwei gemeinsam angetriebene Windentrommeln laufen, die jeweils eine Part in der gleichen Länge aufspulen, wie sie die andere Part abspulen.

Durch die Ketten/Seilführung parallel zum festen Hubgerüstteil (6) werden die auf die beiden Hubgerüstteile wirkenden Knickmomente weitgehend abgeleitet und erlauben eine wesentlich leichtere Konstruktion.

Am unteren Ende des beweglichen Hubgerüstteils (7) sind waagerecht liegende Kissen (18) aus elastischem Material angebracht, die pneumatisch oder hydraulisch aufblasbar sind. Die Kissen nehmen die Kippmoment-Kräfte der außerhalb Ihres Schwerpunktes aufgehängten Last auf. Durch eine gleichmäßige Veränderung der Kisseninhalte vollzieht die Last eine Drehbewegung um ihre Aufhängepunkte an der Quertraverse (19,20). Dadurch kann feinfühlig einerseits eine genau waagerechte Lage der hängenden Last bewirkt oder die Last z.B. beim Aufbau von Wohn-/Bürocontainer-Anlagen bündig zu einem Anschlußcontainer gedrückt werden.

Durch Verändern nur eines Kisseninhaltes vollzieht die Last eine leichte Drehung im ihre senkrechte Achse, so kann ein genaues Anpassen an vorhandene Container bewirkt werden.

Zum Anschlagen von Containern unter Nutzung der an Containern üblichen Eckbeschläge ist der bewegliche Teil des Hubgerüsts (7) mit einer verstellbaren Quertraverse (19) ausgestattet. Die beiden Ausleger (20) (vergl. Fig. 2) sind in die Ausleger umhüllenden Führungsrohren (21) gleitend gelagert, die Form des Innenquerschnitts entspricht der Querschnittsform der Ausleger (20). Die inneren Enden der Ausleger (20) und die äußeren Enden der Führungsrohre (21) können zum leichteren Gleiten der Ausleger mit Rollen (22) versehen sein.

An den äußeren Enden der Ausleger (20) sind zum Anschlagen der Container übliche Haken oder Twistlocks (23) mit Fernbe tätigung .z.B. durch Bodenzug, oder andere Anschlagglieder fest oder beweglich angebracht.

An den Enden der Ausleger (20) und am beweglichen Teil des Hubgerüsts (7) sind ferner jeweils bewegliche hydraulisch oder pneumatisch betätigte Stützzylinder (24) auf der einen Seite Kolbenstange aufwärts, auf der anderen Seite Kolbenstange abwärts gerichtet, angebracht. Durch betätigen der Stützzylinder (24) werden die Ausleger (20) aus- und eingefahren, zugleich übernehmen sie eine Abstützfunktion für die Ausleger unter Last.

Zum Aus-und Einfahren der Ausleger 920) sind die beiden Stützzylinder parallel geschaltet. Zum waagerechten Verschieben der Last ist die hydraulische Steuerung so gestaltet, daß nur ein Hydraulikzylinder einseitig druckbeaufschlagt wird, das abzuführende Hydrauliköl der anderen Seite dieses Zylinders zur Beaufschlagung der entsprechenden Seite des zweiten Zylinders in diesen geführt und nur überflüssiges Hydrauliköl aus der drucklosen Seite des zweiten Zylinders in dem Sammeltank zurückgeführt wird.

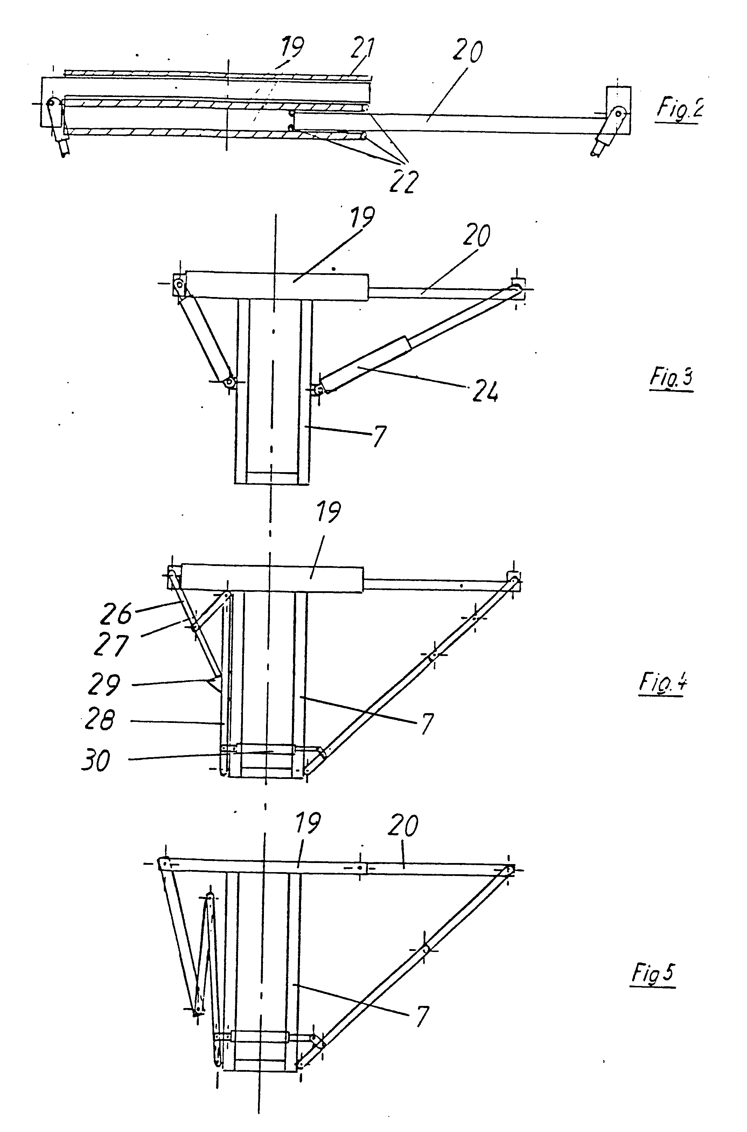

Alternativ können die Ausleger (20) freitragend ausgebildet und mit integrierten Stellgliedern zum Aus-und Einfahren ausgestattet sein (Fig. 3). Durch hintereinanderschalten der beiden Zylinder wie im vorigen Absatz beschrieben, kann ein waagerechtes Verschieben der Last erzielt werden.

Alternativ kann die Quertraverse (19) mit Ausleger (20) auch gemäß Fig. 4 gestaltet sein. Jede Stütze besteht aus einem Stützenoberteil (26), einem Stützenmittelteil (27) und einem Stützenunterteil (28). Die Teile sind drehbar mit den Enden des Auslegers (20), dem beweglichen Teil des Hubgerüsts (7) und untereinander verbunden. Ihre Bewegung zueinander ist im Bereich vollständiger Streckung der Stütze begrenzt, sodaß eine sichere Abstützung erreicht wird. Das Stützenoberteil (26) ist über sein unteres Gelenk hinaus verlängert, sodaß es in eingefahrenem Zustand auf einen Sattel (29) am beweglichen Teil des Hubgerüsts (7) gleiten kann und auch im ein gefahrenen Zustand der Ausleger eine Abstützung erfährt.

Die Betätigung und Arretierung der Stützen erfolgt über Stellglieder oder von Hand.

In einer weiteren alternativen Ausführung des Ladegerätes kann anstelle eines Hubgerüsts (6,7) eine teleskopierbare Säule genutzt werden.

Als weitere Alternative kann der bewegliche Teil des Hubgerüsts (7) mit einer festen, der zulässigen Fahrzeugbreite entsprechenden Quertraverse (19) ausgestattet sein mit an ihre Enden angebrachten Anschlaggliedern. An den Enden sind ferner um eine waagerechte Achse drehbare Ausleger (20) manuell, hydraulisch oder pneumatisch ausschwenkbar, die an ihren Enden ebenfalls Anschlagglieder tragen (vergl. Fig. 5) und das Anschlagen der Container an ihrer Längsseite ermöglichen. Dabei ragen diese Anschlagglieder soweit über den Ausleger hervor, daß beim Anschlagen die Anschlagglieder der festen Traverse nicht stören.

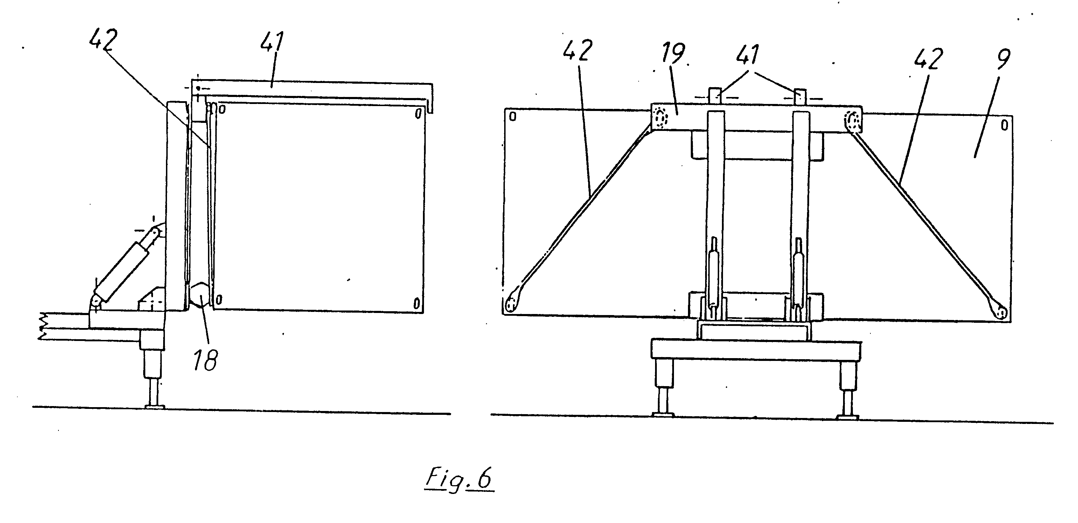

In einer weiteren alternativen Gestaltung des Ladegerätes sind an der Quertraverse (19) Seile oder Ketten (42) angebracht, (vergl. Fig. 6), die zu den unteren Eckbeschlägen des Containers führen und dort mit handelsüblichen Gliedern angeschlagen sind. An der Quertraverse (19) befinden sich von oben über den Container greifende Schwenkarme (41) zur Aufnahme des Kippmoments des Containers.

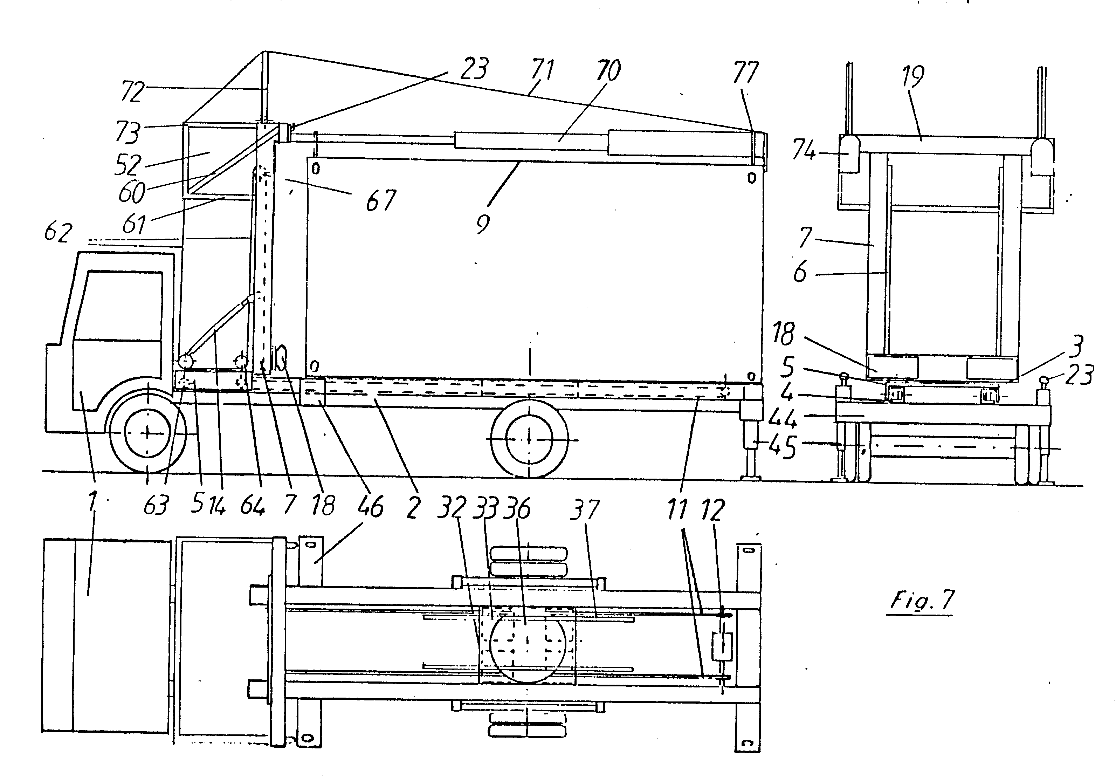

Zum Anschlagen von Containern und Raumzellen, die eine Vier-Punkt-Aufhängung erfordern oder deren Trageösen nicht an den oberen Ecken angebracht sind, kann die Quertraverse (19) mit in Fahrzeuglängsachse teleskopierbaren Auslegern (70) ausgestattet sein (vergl. Fig. 7). Diese tragen an ihren äußeren Enden Abspannseile (71), die über niederlegbare Stützen (72) zu Befestigungspunkten (73) geführt sind. Diese sind etwa waagerecht gegen den beweglichen Teil des Hubgerüsts (7) abgestützt und mit den Endpunkten der Ketten/Seile (62) verbunden.

Die Ausleger (70) sind in verschiedenen Ausfahrstellungen arretierbar und die Abspannseile (71) zugehörig verkürzbar. Die Auslegerteile tragen verstellbare Lastenaufnahmeaugen (77). An den äußeren Enden der Ausleger (70) sind nach unten ragende Druckplatten (74) angebracht. Beim Anschlagen von Containern gem. Fig. 6 werden die Ausleger (70) über den Container geschwenkt und die Druckplatten (74) nehmen die auftretenden Kippmomente auf.

Als eine Alternative können die Ausleger (70) am beweglichen Teil des Hubgerüsts (7) um eine etwa senkrechte Achse drehbar angebracht sein (Fig. 8), in einer Stellung quer zur Fahrzeuglängsachse nach außen gerichtet sein zum Anschlagen von Containern an der Längsseite, in einer zweiten Stellung nach hinten weisen zum Anschlagen von Containern an der Stirnseite mit Vier-Punkt-Aufhängung und in einer dritten Stellung quer zur Fahrzeuglängsachse zur gegenüberliegenden Seite des beweglichen Teils des Hubgerüsts (7) weisen und dort mit der lösbaren Verbindung (75) befestigt sein. In dieser Stellung werden Container stirnseitig in Zwei-Punkt-Aufhängung angeschlagen. Für diese alternative Ausführung ist das äußere Ende der Ausleger (70) mit entsprechenden Anschlaggliedern ausgestattet.

In der Auslegerstellung "quer zur Fahrzeuglängsachse nach außen" werden die Abspannseile (71) über die Stützen (72) kraftschlüssig miteinander verbunden.

Zur Aufnahme der aus dem Kippmoment der Last auf die Ausleger (20) bzw. (70) wirkenden Kräfte können von deren Anschlaggliedern Abspannungen (76) zu den Befestigungspunkten (73) geführt werden.

Aus den tragenden Teilen (60), (61), (73) und weiteren Konstruktionsteilen ist eine mit dem beweglichen Teil des Hubgerüsts (7) verbundene Bedienungsplattform (52) ausgebildet, die dem Bedienungsmann eine umfassende Übersicht über die Bewegungsvorgänge, die Ausführung des größten Teils der manuellen Bedienungsarbeiten und mit Hilfe von installierten Steuerelementen die Steuerung aller Bewegungsabläufe ermöglicht.

Sofern der Container quer zu seiner Längsachse angehoben wurde, ist es erforderlich, ihn anschließend für den Transport um seine senkrechte Achse in Fahrtrichtung zu drehen. Zu diesem Zweck ist das Fahrzeug mit einer versenkbaren Drehvorrichtung (31) versehen (vergl. Fig. 1 u. 9). Sie ist im Bereich des Lastschwerpunktes mit Drehpunkt auf der Mittel-Längsachse des Fahrzeugs zwischen dem Fahrzeugrahmen (2) und dem Hilfsrahmen (3) angebracht. In einem kasten (32) befinden sich mehrere Kissen aus elastischem Material (33) die hydraulisch oder pneumatisch aufblasbar sind. Sie tragen ein Drehscheiben-Unterteil (34), daß mit seinen senkrechten Flächen (35) von den Seitenwänden des Kastens (32) geführt wird. Auf dem Drehscheiben-Unterteil (34) ist drehbar die Drehscheibe (36), die die Last in ausgefahrenem Zustand aufnimmt und die Drehung erlaubt.

Die Drehscheibe kann mit Trägern (37) versehen sein, um den Container an seinen Außenlängsträgern zu unterfangen.

Alternativ kann das Drehscheiben-Unterteil auch mit 4 um waagerechte Achsen unter dem Unterteil und am Fahrzeugrahmen drehbar angelenkten Stützen versehen sein. Mit Hilfe eines am Drehscheiben-Unterteil und am Fahrzeugrahmen beweglich in Richtung der Fahrzeug-Längsachse angelenkten hydraulischen oder pneumatischen Stellzylinders wird das Drehscheiben-Unterteil (34) von den Stützen hochgedrückt und in Funktion gebracht.

Andere Ausführungsformen zum Anheben der Drehscheibe (36) sind denkbar.

Am hinderen Ende des Rahmens (2) ist ein Querträger (44) angebracht, der an seinen äußeren Enden nach unten hydraulisch oder pneumatisch ausfahrbare Stützen (45) mit Bodenplatten zur Stabilisierung des Fahrzeugs trägt. Die Steuerung der Stützzylinder (45) ist so ausgelegt, daß diese einerseits zum Aus-und Einfahren gleichzeitig oder einzeln mit Drucköl beschickt werden können, andererseits aber auch hintereinander geschaltet werden können, sodaß das Verlängern eines Stützbeins ein entsprechendes Verkürzen des anderen Stützbeins bewirkt. Durch diese Schaltung wird bewirkt, daß bei der Montage von Wohncontainern besonders in mehreren Lagen der Container geringfügig um seine zur Fahrzeugachse parallelen Achse gedreht und damit präzise zu den vorhandenen Containern ausgerichtet werden kann.

In den hinteren Querträger (44) eingelassen sind an den Enden nach oben ragende, versenkbare Twistlocks angebracht, mit denen die geladenen Container für den Transport sicherbar sind. Im vorderen Bereich des Rahmens (2) sind Traversen (46) angebracht, die ebenfalls mit Twistlocks zur Sicherung der Container ausgestattet sind.

Auf dem hinteren Querträger (44) und den Traversen (46) können weitere verriegelbare Führungen für Container und Behälter angebracht sein, die nicht der ISO-Norm entsprechen.

Zur Nutzung des Fahrzeugs als Hinterkipper wird ein handelsüblicher Kipper-Aufbau an seinen unteren Ecken mit Eckbeschlägen nach ISO-Norm ausgestattet, wobei die hinteren Beschläge um die Achse quer zur Fahrzeug-Längsachse drehbar gelagert sind. Die vorderen Beschläge sind über Ketten, Seile oder Bänder mit den Anschlaggliedern des beweglichen Teils des Hubgerüsts verbunden. Der Kippvorgang wird durch Betätigung der Hubeinrichtung in etwa vorderen Stellung bewirkt.

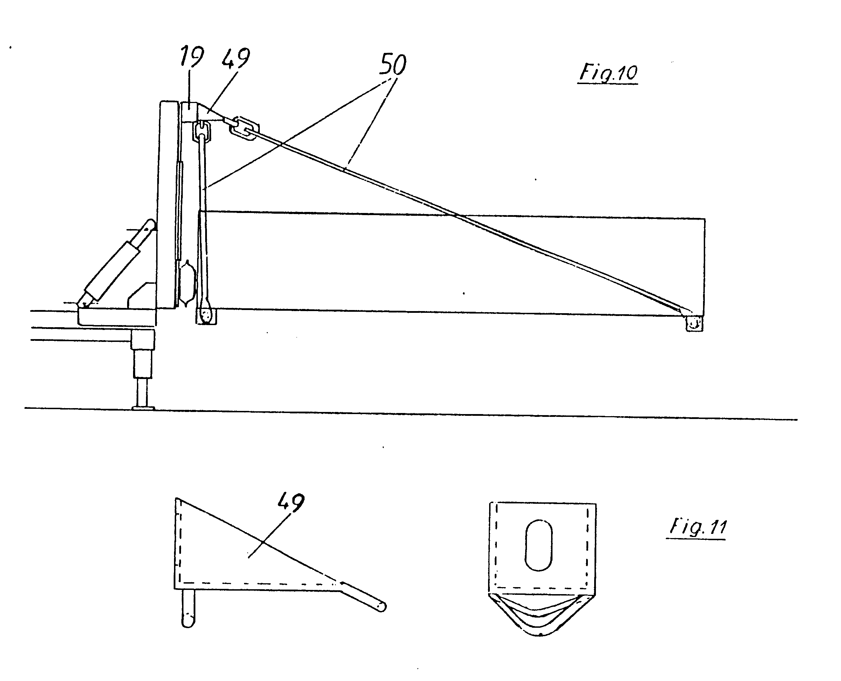

Zur Nutzung des Fahrzeugs zum Transport von Wechselpritschen (Fig. 10 u. 11) und anderen Transportgütern mit Anschlagpunkten an den unteren Längskanten sind an den Anschlaggliedern (23) des beweglichen Teils des Hubgerüsts (7) Anschlagwinkel (49) anbringbar, an denen verkürzbare Ketten, Seile oder Bänder (50) mit Anschlaggliedern zum Anschlagen der Wechselbrücken und sonstigen Transportgüter befestigt sind.

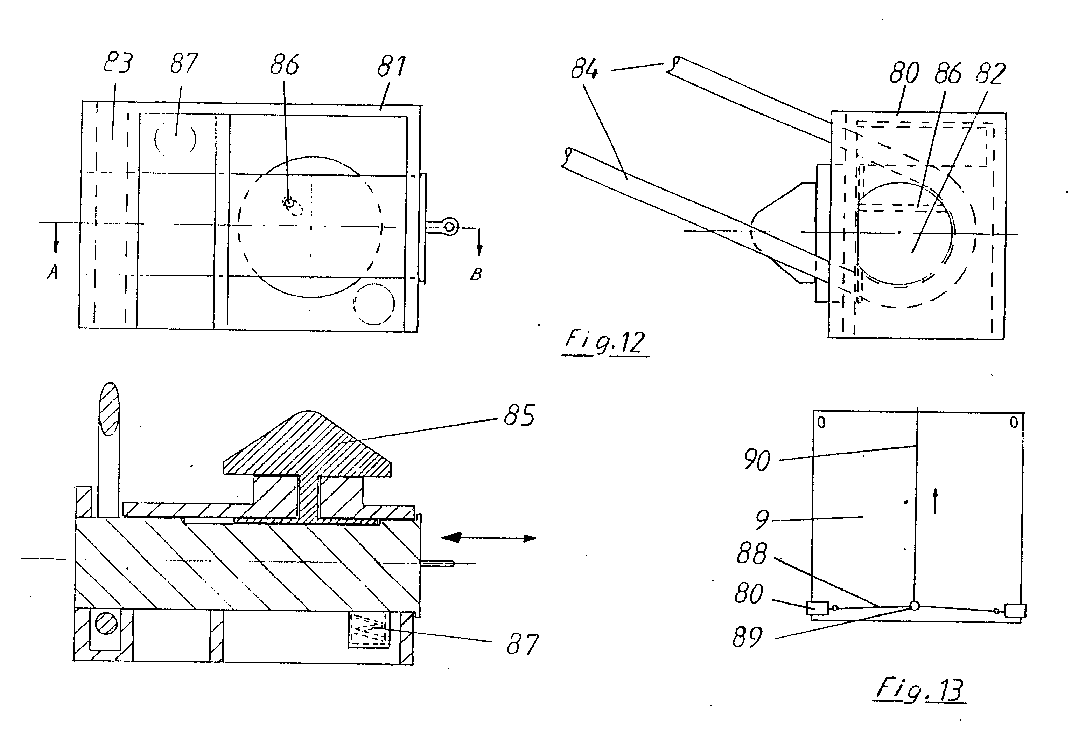

Sollen mit Transportfahrzeugen gemäß dieser Erfindung, die nicht mit Auslegern (70) ausgestattet sind, Raumzellen bewegt und verbaut werden, die einer Vier-Punkt-Aufhängung an ihrer Unterkannte erfordern, so erfolgt dies unter Nutzung des Brauches, daß Wohncontainer mit einem Zwischenraum von ca. 25 mm aneinandergefügt werden (Fig. 12 u. 13). Erfindungsgemäß werden die längeren am Anschlagwinkel (49) befestigten Seile als Doppelseil ausgeführt. An den dem Hubgerüst (6,7) abgewandten Container-Eckbeschlägen werden Anschlagglieder (80) angebracht, die mit Twistlocks (85) ausgestattet sind. Das Twistlock (85) wird gegen den Druck der Federn (87) in den Eckbeschlag eingeführt und die Verriegelung durch Verschieben des Bolzens (82) über den Dorn (86) begonnen. Das Auge des doppelten Trageseils (84) wird in die Tasche (83) des Anschlagglieds (80) eingeführt und der Bolzen (82) durch das Auge des Trageseils (84) bis zur Endstellung weiterbewegt, dabei wird gleichzeitig die Verriegelung des Twistlocks (85) vollendet.

Die Bolzen (82) der zwei zusammengehörigen Anschlagglieder (80) sind mit dem in der Mitte einen Ring tragenden Seil (89) verbunden. Am Ring ist eine Betätigungsleine (90) angebracht, die über den Container zur Bedienungsplattform (52) führt. Zum Lösen der Verbindungen nach Beendigung der Containerbewegung werden durch Ziehen der Betätigungsleine die Bolzen (82) aus der Arbeitsstellung gezogen. Sie geben die Trageseile (84) frei und entriegeln die Twistlocks (85). Die Druckfedern (87) drücken die Twistlocks (85) aus den Eckbeschlägen. die Anschlagglieder (80) und die Trageseile (84) können von der Bedienungsplattform (52) aus eingeholt werden.

Wird als Transportfahrzeug ein Sattelzug vorgesehen, so ist die Ladeeinrichtung aus Sattelzugmaschine angebracht. Die Drehvorrichtung kann entfallen.

## Ansprüche

1. Transportfahrzeug (1) zum Transport von Containern, Raumzellen, Flats, Fertiggaragen und anderen Transportgütern großer Raumausdehnung mit einer Ladeeinrichtung zum Aufnehmen der Last vom Boden, von anderen Fahrzeugen oder aus Stapeln hinter dem Transportfahrzeug, zum Absetzen der Last in gleicher Weise sowie zum Drehen der Last auf dem Fahrzeug unter Nutzung eines auf dem Fahrzeug in Fahrzeuglängsachse verfahrbaren Hubgerüstwagens (5), der ein mit Hubgerüststützen (14) neigbares Hubgerüst (6,7) trägt, sowie einer handelsüblichen Zweipunkt-Abstützung zum Boden am Heck des Fahrzeugs,

dadurch gekennzeichnet, daß das bewegliche Hubgerüstteil (7) an seinem oberen Ende eine Quertraverse (19) trägt, an deren lastabgewandter Seite - schräg abwärts geneigte Zugstücke (60), die an ihren unteren Teilen mit Abstützungen (61) zum beweglichen Hubgerüstteil (7) verbunden sind und an denen nach unten führende Ketten oder Seile (62) angebracht sind, die etwa parallel zum Hubgerüst (6) zum vorderen Teil des Hubgerüstwagens (5) geführt sind, dort über Rollen (63) zu Antriebsrädern (64) oder Antriebstrommeln, durch gemeinsame Welle (65) von einem Antriebsaggregat (66) mit Selbstsperrung angetrieben, laufen, von dort über Umlenkrollen (67) im oberen Teil des feststehenden Hubgerüstteils (6) geführt sind und am unteren Teil des beweglichen Hubgerüstteils (7) befestigt sind;

weiter dadurch gekennzeichnet, daß die Zugstücke (60), Abstützungen (61) und Verbindungen zum Befestigungspunkt (73) Bestandteile einer am beweglichen Hubgerüstteil (7) angebrachten Bedienungsplatform (52) sind;

weiter dadurch gekennzeichnet, daß die Quertraverse (19) mit teleskopierbaren Auslegern (20) versehen ist, an deren äußeren Enden senkrecht oder waagerecht angreifende Anschlagglieder zur Containerbefestigung angebracht sind und weiter an den äußeren Enden der Ausleger (20) drehbar angelenkte, schräg nach unten innen ragende hydraulisch oder pnuematisch betätigte Stützzylinder (24) vorgesehen sind, die ebenfalls drehbar am beweglichen Teil des Hubgerüsts (7) angelenkt sind;

weiter dadurch gekennzeichnet, daß die Stützzylinder (24) mit einer wählbaren Steuerung versehen sind. Zum Ausfahren und Einfahren werden die jeweiligen unteren Zylinderräume mit Drucköl beschickt. Zur Erzeugung einer Querbewegung der Ausleger (20) sind die beiden Zylinder hintereinander geschaltet. Das gleiche Steuerungsverfahren ist auch für die Betätigung der Hydraulik-/Pneumatik-Zylinder der Abstützeinrichtung des Fahrzeugs (44 u. 45) installiert;

weiter dadurch gekennzeichnet, daß am unteren Teil des beweglichen Hubgerüstteils (7) zwei pneumatisch oder hydraulisch gleichmäßig oder unterschiedlich aufblasbare elastische Kissen (18) oder Stellglieder angebracht sind;

weiter dadurch gekennzeichnet, daß zwischen dem Fahrzeugrahmen (2) und dem Hilfsrahmen (3) etwa in der Mitte der Ladefläche des Fahrzeugs eine versenkbare Drehscheibe (36) mit einem Drehbereich von mindestens 90° angebracht ist;

weiter dadurch gekennzeichnet, daß an den Anschlaggliedern (23) der Quertraverse (19,20) in Fahrzeuglängsachse teleskopierbare Ausleger (70) anbringbar sind, die an ihren äußeren Enden Abspannseile (71) tragen, welche über niederlegbare Stützen (72) zu Befestigungspunkten (73) geführt sind, die waagerecht gegen den beweglichen Teil des Hubgerüsts (7) abgestützt etwa senkrecht mit den Endpunkten der Ketten/Seile (62) verbunden sind;

weiter dadurch gekennzeichnet, daß die Ausleger (70) in ver schiedenen Ausfahrstellungen arrettierbar und die Abspannseile (71) zugehörig verkürzbar sind und daß die Auslegerteile verstellbare Lastaufnahmeaugen tragen und weiter an den äußeren Enden mit nach unten ragenden Druckplatten (74) versehen sind.

2. Transportfahrzeug gemäß Anspruch 1, dadurch gekennzeichnet, daß auf dem Hubgerüstwagen (5) eine hydraulisch oder pneumatisch teleskopierbare Säule etwa senkrecht zur Ausführung der Hubbewegung installiert ist.

3. Transportfahrzeug nach Anspruch 1, und 2, dadurch gekennzeichnet, daß an den Enden der Ausleger (20) der Quertraverse (19) Stützen angebracht sind, die schräg nach innen geneigt am beweglichen Teil des Hubgerüsts (7) beweglich abgestützt sind, wobei das Stützenoberteil (26) über ein Gelenk mit dem Stützenmittelteil (27) und dieses über ein weiteres Gelenk mit dem Stützenunterteil (28) so verbunden sind, daß der Bewegungsraum des Stützenunterteils (28) zwischen einer etwa senkrechten Position und einer der größten Streckung der Stütze entsprechenden Neigung beschränkt ist und das Stützenoberteil (26) eine über das Verbindungsgelenk zum Stützenmittelteil (27) hinausragende Verlängerung besitzt, die auf einen am beweglichen Teil des Hubgerüsts (7) fest angebrachten Sattel (29) gleitet und die Bewegung der Stützen zwischen ihren Endlagen durch hydraulische oder pneumatische Stellzylinder (30) oder manuell bewirkt wird.

4. Transportfahrzeug nach Anspruch 1,2,3, dadurch gekennzeichnet, daß am beweglichen Teil des Hubgerüsts (7) eine feste Quertraverse (19) mit Anschlaggliedern (23) angebracht ist und im Bereich der Enden dieser Traverse um etwa waagerechte Achsen drehbare, manuell, hydraulisch oder pneumatisch betätigte Auslegerarme ausschwenkbar angebracht sind, die an Ihren Enden ebenfalls Anschlagglieder tragen.

5. Transportfahrzeuge nach Anspruch 1,2,3 und 4, dadurch gekennzeichnet, daß vom beweglichen Teil des Hubgerüsts (7) schräg abwärts geführte Seile, Bänder oder Ketten (42) zu den unteren Eckbeschlägen des Containers zur Aufnahme der Last geführt sind und zur Aufnahme des Kippmomentes der Last von oben über die Last greifende Schwenkarme (43) oder Ausleger (70) am beweglichen Teil des Hubgerüsts (7) drehbar angelenkt sind;

6. Transportfahrzeug nach Anspruch 1,2,3,4 und 5, dadurch gekennzeichnet, daß die teleskopierbaren Ausleger (70) am beweglichen Teil des Hubgerüsts (7) um eine etwa senkrechte Achse drehbar angebracht sind, in einer Stellung quer zu Fahrzeuglängsachse nach außen ragen, in einer zweiten Stellung gemäß Anspruch 1 nach hinten weisen und einer dritten Stellung quer zur Fahrzeuglängsachse zur gegenüberliegenden Seite des beweglichen Teils des Hubgerüsts (7) weisen und dort lösbar befestigt und mit den notwendigen Anschlaggliedern versehen sind und die Abspannseile (71) in den Stellungen quer zur Fahrzeuglängsachse kraftschlüssig miteinander verbunden sind.

7. Transportfahrzeug nach Anspruch 1,2,3,4,5 und 6, dadurch gekennzeichnet, daß von den Anschlaggliedern (23) der Ausleger (20) bzw. (70) Abspannugen (76) zu den Befestigungspunkten (73) geführt sind.

8. Transportfahrzeug nach Anspruch 1,2,3,4,5 und 6, zum Einsatz als Hinterkipper dadurch gekennzeichnet, daß die Kippbrücke im Bereich ihrer unteren vier Ecken mit Eckbeschlägen etwa nach ISO-Norm ausgestattet ist, wobei die beiden hinteren Beschläge um eine waagerechte Achse quer zur Fahrzeuglängsachse drehbar gelagert sind und diese Eckbeschläge mit den Twistlocks des hinteren Querträgers (44) verbunden und die vorderen Eckbeschläge zum Kippen über Seile, Ketten oder Bänder mit dem beweglichen Teil des Hubgerüsts (7) verbunden sind.

9. Transportfahrzeug nach Anspruch 1,2,3,4,5,6,7 und 8, dadurch gekennzeichnet, daß die Anschlagglieder 923) des beweglichen Teils des Hubgerüsts (7) Anschlagwinkel (49) tra gen, von denen verkürzbare Ketten, Seile oder Bänder (50) mit Anschlaggliedern zum Anschlagen von Wechselbrücken und anderen Transportgütern ausgehen.

10. Transportfahrzeug nach Anspruch 1,2,3,4,5,6,7,8 und 9, zum Anschlagen von Raumzellen an ihren unteren Eckbeschlägen dadurch gekennzeichnet, daß fernlösbare Anschlagglieder (80) verfügbar sind, diese dadurch gekennzeichnet, daß in einem Anschlaggliedgehäuse (81) ein waagerecht verschiebbarer Bolzen (82) gelagert ist, der in Arbeitsstellung das Auge des in der Tasche (83) eingeführten Trageseils (84) durchdringt. In Lösestellung gibt der Bolzen (82) das Tragseil (84) frei. Das Anschlagglied (80) ist mit Twistlock (85) mit dem Eckbeschlag der Raumzelle verbindbar. Das Twistlock (85) wird vom Dorn (86) verriegelt, und entriegelt, durch Druckfedern (87) aus der Öffnung des Eckbeschlages ausgeworfen. Die Bolzen (82) zweier Anschlagglieder (80) sind mit einem Seil (88) verbunden, am Ring (89) greift eine Betätigungsleine an.

11. Transportfahrzeug nach Anspruch 1,2,3,4,5,6,7,8,9 und 10, dadurch gekennzeichnet, daß zum Bewegen des Hubgerüstwagens (5) rückensteife Ketten verwendet werden.

Fig. 1

Fig.2

Fig.3

Fig.4

Fig 5

_Fig.6_

0 251 219

Fig. 7

0 251 219

_Fig. 8_

23     70   71   76   73   72     6,7     52   75   23

0 251 219

33     36       34

35

32

_Fig. 9_

19  49    50                    _Fig.10_

49                              _Fig.11_

0 251 219

Fig.12

Fig.13